Europäisches Patentamt

European Patent Office

Office européen des brevets

(11) Publication number: **0 262 008**
**A1**

## (12) EUROPEAN PATENT APPLICATION

(21) Application number: **87401890.6**

(22) Date of filing: **14.08.87**

(51) Int. Cl.⁴: **G 11 B 23/087**

(30) Priority: **14.08.86 JP 124727/86**

(43) Date of publication of application:
**30.03.88 Bulletin 88/13**

(84) Designated Contracting States:
**AT CH DE FR GB IT LI NL SE**

(71) Applicant: **SONY CORPORATION**
**7-35 Kitashinagawa 6-Chome Shinagawa-ku**
**Tokyo 141 (JP)**

(72) Inventor: **Ozawa, Kazuo Sony magnetic products, inc.**
**5-6, Kitashinagawa 6-chome**
**Shinagawa-ku Tokyo (JP)**

**Makino, Masahiro Sony magnetic products, inc.**
**5-6, Kitashinagawa 6-chome**
**Shinagawa-ku Tokyo (JP)**

(74) Representative: **Thevenet, Jean-Bruno et al**
**Cabinet BEAU DE LOMENIE 55 rue d'Amsterdam**
**F-75008 Paris (FR)**

(54) A structure of a tape cassette having a spring for urging reels.

(57) A structure of a tape cassette for use in recording/reproducing apparatus, wherein the space within which a pair of reels is housed is formed by first and second cassette shelves which are mutually engaged to construct a casing of the tape cassette. A reel press spring (16) having three or more mounting holes aligned roughly perpendicular to the longest axis of the shelf is attached to the internal surface of the first cassette shelf (11), with at least one of the mounting holes engaged with a mounting pin (20a, 20b) projecting from the inner surface of the first cassette shelf (11). In addition, both ends (19a, 19b) of the reel press spring (16) along its longest axis are disposed such that they diverge from the inner surface of the cassette shelf and come in contact with the reels. The multiple holes of the spring (16) allow said spring to be mounted on a diversity of first cassette shelves (11) whose mounting pins (20a, 20b) are positioned differently.

FIG. 1

**Description**

## A STRUCTURE OF A TAPE CASSETTE HAVING A SPRING FOR URGING REELS

The present invention relates generally to the structure of videotape cassettes used in magnetic recording/reproducing apparatus. More specifically it relates to the structure of the cassette casing and internal reels around which tape is wrapped.

Videotape cassettes are well known in the art. Such cassettes typically comprise a pair of reels around which a magnetic tape is wrapped inside a protective casing. The housing generally has transparent windows through which a part of each reel is exposed to view. When inserted in a recording/reproducing apparatus, such as a video cassette recorder (VCR), the reels of the cassette engage the reel beds within the apparatus, causing the reels to spin and the videotape to run. In order for the tape to run smoothly, it is necessary for each reel to properly engage with its corresponding reel bed. Therefore, the tape cassette is provided with a reel press spring, in a space defined by the casing, that presses each reel in the proper direction toward its corresponding reel bed.

In cassettes as described above, the reel press spring is attached to the inner surface of the upper shelf of the casing. A pair of mounting holes, positioned centrally on and perpendicular to the length of the spring, engage a pair of mounting pins projecting centrally from the upper shelf. In addition, the spring has two arms which extend outward from the point of attachment parallel to the length of the upper shelf. These arms have elastic properties and project at an acute angle away from the upper shelf toward the lower shelf. The lower and upper shelves form the casing, thereby enclosing the reels. The tip of each arm comes in contact with the upper center portion of its respective reel within this space.

The lower shelf is provided with holes, through which the center portion of each reel can be seen. When the cassette is inserted, the reels engage their respective reel beds via these holes. At such time, pressure from the arms of the spring causes the spring to depress the reels toward the reel beds.

Japanese Utility Model Application (Zitsugan) file No.Sho 61-56367 exemplifies the structure of a typical cassette tape as described above and demonstrates its drawbacks. In cassettes of this type, only one kind of casing can be used with one kind of spring because the spring has only one set of holes to receive the pins of the housing. Such direct casing to spring specificity necessitates the product of a different and specific type of spring for each type of housing. Consequently, the manufacturing process becomes more difficult and the cost is increased.

The present invention comprises: (a) an elongate, plate-like spring member; (b) a pair of reels which are mutually spaced apart; (c) a first cassette shelf; (d) a second cassette shelf, both first and second cassette shelves engaging each other and defining a space within which the pair of reels is housed; (e) at least one pin projecting to a point in space between the reels; and (f) means for attaching the center portion of the spring member to a position on the inner surface of the first cassette shelf as defined by the pin so that each end of the spring member is in contact with its respective reel.

Alternatively, the present invention may comprise: (a) an elongated plate-like spring member having at least three holes at a center portion thereof; (b) a pair of reels which are mutually spaced apart, the pair of reels being capable of contacting with respective ends of the elongated spring member; (c) a first cassette shelf; (d) a second cassette shelf, both first and second cassette shelves defining a space within which the pair of reels are housed; and (e) at least one pin projecting from the inner surface of the first cassette to a point in space between the reels, the pin being engaged with at least one of the holes at the center portion of the spring member.

A principle object of the present invention is to provide a structure of a tape cassette which can achieve the reduction of manufacturing costs.

Another object of the present invention is to provide a structure of a tape cassette which can facilitate the manufacturing process of the tape cassette.

The foregoing and other objectives, features and advantages of the invention will be more readily understood upon consideration of the following detailed description of certain preferred embodiments of the invention, taken in conjunction with the accompanying drawings.

Fig.1 is a plan view of the inner surface of a cassette shelf according to the present invention,

Fig.2 is a perspective view of a whole tape cassette structure which includes the cassette shelf shown in Fig.1,

Fig.3 is a plan view of the reel press spring 16 shown in Fig.1,

Fig.4 is a side view of the reel press spring 16 shown in Fig.1,

Fig.5 is a plan view of the inner surface of the cassette shelf of the second preferred embodiment of the present invention,

Fig.6 is a plan view of the inner surface of the cassette shelf of the third preferred embodiment of the present invention.

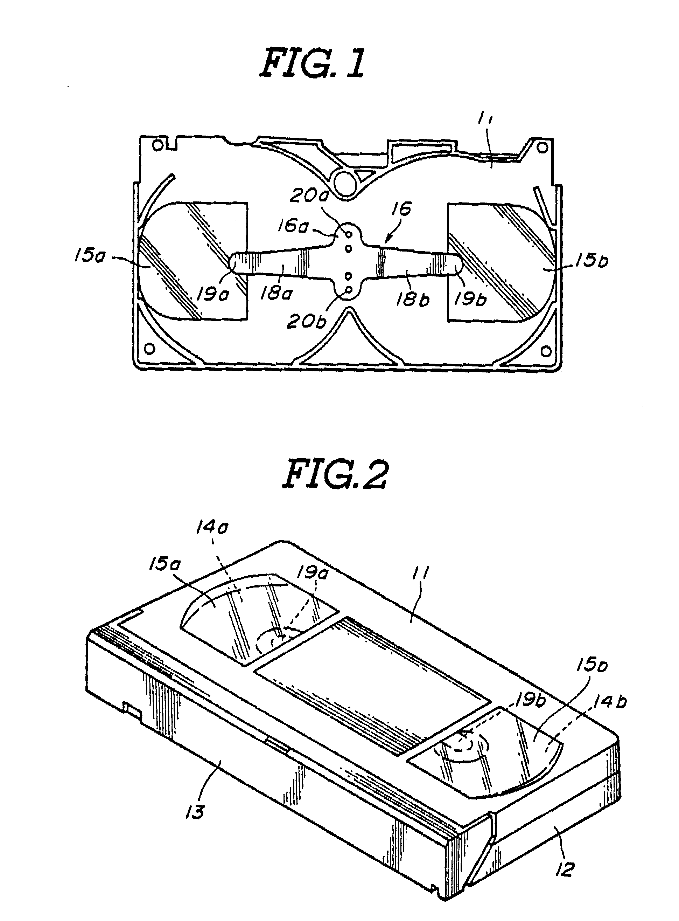

Now referring to the drawings, the tape cassette of Fig.2 has a casing comprising a first cassette shelf 11 and a second cassette shelf 12 engaged with the first cassette shelf 11 to form an internal space housing the reels 14a and 14b. A lid 13 is attached to the first and second cassette shelves 11 and 12 and is rotatably supported on a side edge portion of the first cassette shelf 11. The lid 13 serves to open and close the internal space housing the pair of reels 14a and 14b as defined by the first and second cassette shelves 11 and 12. The first cassette 11 is provided with a pair of transparent window portions 15a and 15b. The transparent window portions 15a and 15b provide an external transparent view for the pair of reels 14a and 14b and the wrapped magnetic tape in the internal space.

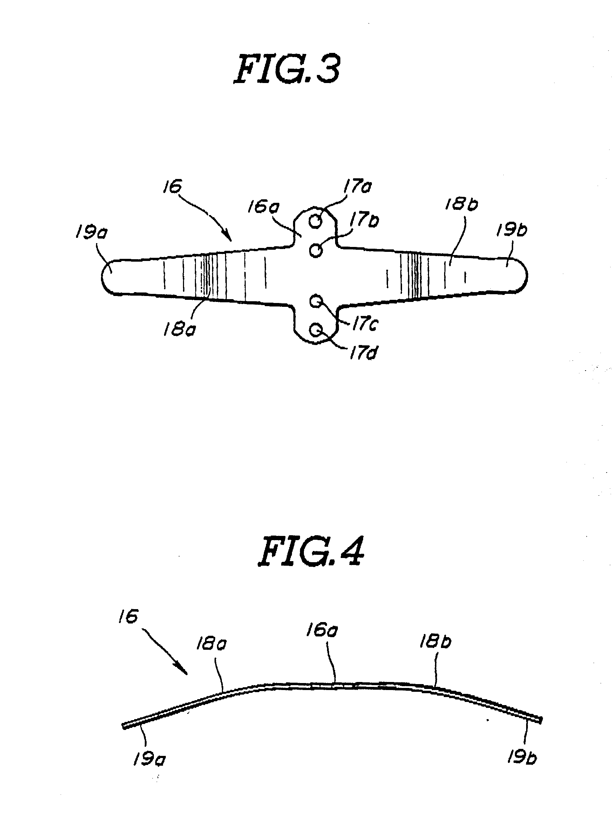

As shown in Fig.1, a reel press spring 16 is attached onto the inner surface of the first cassette shelf 11. The reel press spring 16 is made of a flexible and elastic plate that is bowed in a single direction at its ends as further illustrated in Figs.3 and 4. The reel press spring 16 may be formed by punching out an appropriately shaped plate and is preferably of a stainless steel.

The center portion 16a of the reel press spring 16 is provided with four consecutive mounting holes 17a, 17b, 17c, and 17d aligned along a line perpendicular to the length of the spring 16. The two outermost mounting holes 17a and 17d are, in this embodiment, engaged respectively with a pair of mounting pins 20a and 20b projecting from the center portion of the inner surface of the first cassette shelf 11. When mounted, the end portions 19a and 19b and arms 18a and 18b diverge away from the inner surface of the first cassette shelf 11 by a spring force. The conformation of the spring 16 is shown in Fig.4. In addition, the respective ends 19a and 19b of the arm portions 18a and 18b of the spring 16 come in contact with and deliver pressure to the respective reels 14a and 14b, which are thereby depressed.

Finally, a pair of transparent holes (not shown) is provided on the second cassette shelf 12 through which the center portions of the pair of reels 14a and 14b can be viewed and the reel beds of recording/ reproducing apparatus can engage the center portions of reels 14a and 14b. When the cassette is inserted, the tip ends 19a and 19b of the arm portions 18a and 18b of the reel press spring 16 apply force to the pair of reels 14a and 14b, depressing them toward the pair of reel beds in the magnet recording/reproducing apparatus. Thus, the reels spin, moving the magnetic tape through the recording/reproducing apparatus in a stable fashion.

Since the reel press spring 16 has four mounting holes 17a, 17b, 17c and 17d arranged in a row, the reel press spring 16 can be attached to any one of a number of cassette shelves having mounting pins in different positions on the internal surface.

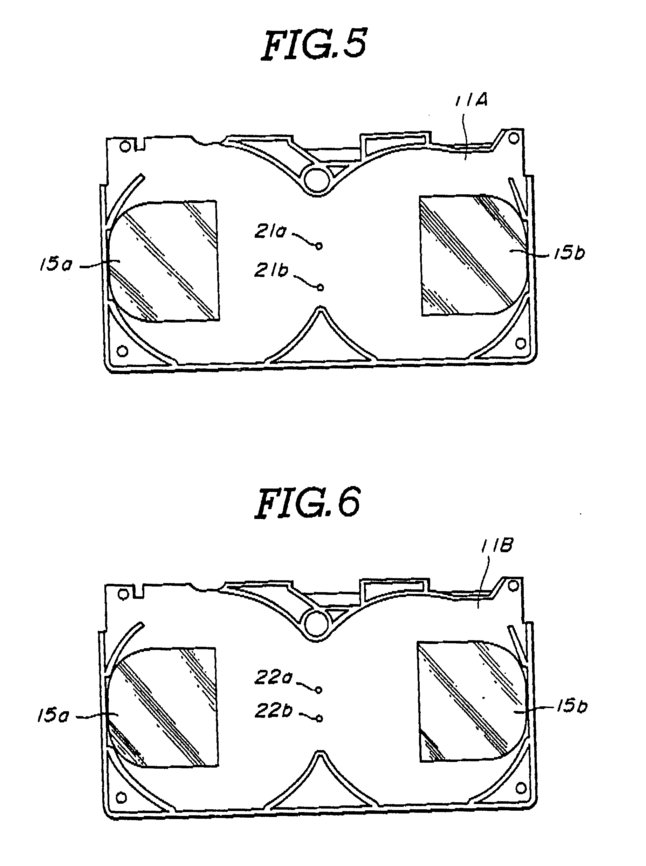

In Fig.5, the mounting pins 21a and 21b are positioned closer to one another than the mounting pins 20a and 20b in cassette shelf 11 of Fig.1. In this instance, the spring 16 is mounted to the cassette shelf 11A by engaging pins 21a and 21b with mounting holes 17b and 17d.

Fig.6 shows yet another first cassette shelf, 11B. The first cassette shelf 11B is provided with two mounting pins 22a and 22b with a mutual inter-pin distance being shorter than that between the two mounting pins 21a and 21b. In this embodiment, spring 16 is mounted by engaging the mounting holes 17b and 17c with mounting pins 22a and 22b of cassette shelf 11B.

As described above, the tape cassette structure according to the present invention is provided with a reel press spring having generality of mounting. Thus, a single type of spring can be used with a variety of cassette shelves, lowering the cost of and increasing the ease of manufacture.

Although the present invention has been shown and described with respect to preferred embodiments, various changes and modifications which are obvious to a person skilled in the art to which the invention pertains are deemed to lie within the spirit and scope of the invention.

## Claims

1. A structure of a tape cassette, characterized in that it comprises:

(a) an elongate, plate-like spring member (16);

(b) a pair of reels (14a, 14b) which are mutually spaced apart;

(c) a first cassette shelf (11);

(d) a second cassette shelf (12), said second cassette shelf (12) engaging said first cassette shelf (11) and defining a space within which said pair of reels (14a, 14b) is housed;

(e) one or more pins (20a, 20b; 21a, 21b; 22a, 22b) projecting from an inner surface of said first cassette shelf (11) into a space which is located substantially between said pair of reels (14a, 14b); and

(f) means (17a, 17b, 17c, 17d) for attaching a center portion of said elongated plate-like spring member (16) to said inner surface of said first cassette shelf (11) at a position defined by said pin (20a, 20b; 21a, 21b; 22a, 22b) so that each end (19a, 19b) of said elongated plate-like member (16) is In contact with one reel of said pair of reels (14a, 14b).

2. The structure of the tape cassette according to claim 1, characterized in that the attaching means comprises at least three holes (17a, 17b, 17c, 17d) provided at the center (16a) of said elongated plate-like spring member (16) and arranged in rows roughly perpendicular to the longest axis of said elongated plate-like spring member (16).

3. The structure of the tape cassette according to claim 2, characterized in that the number of said pins (20a, 20b; 21a, 21b; 22a, 22b) are two, said two pins being arranged in rows so as to coincide with the arranged direction of at least three of the holes (17a, 17b, 17c, 17d) in the plate-like spring member (16) and any two of said holes being engaged with said two pins (20a, 20b; 21a, 21b; 22a, 22b).

4. A structure of a tape cassette characterized in that it comprises:

(a) an elongated plate-like spring member (16) having at least three centrally positioned holes (17a, 17b, 17c, 17d);

(b) a pair of reels (14a, 14b) which are mutually spaced apart, each reel (14a, 14b) of said pair of reels being capable of coming in contact with a respective end (19a, 19b) of said elongated spring member (16);

(c) a first cassette shelf (11);

(d) a second cassette shelf (12), said second cassette shelf (12) engaging said first cassette shelf (11) and defining a space within which said pair of reels (14a, 14b) is housed; and

(e) at least one pin (20a, 20b; 21a, 21b; 22a, 22b) projecting inwardly from an inner surface of the first cassette shelf (11), said pin being engaged with at least one of said holes (17a, 17b, 17c, 17d) at a center portion of said elongated plate-like spring member (16).

5. The structure of the tape cassette according to claim 4, characterized in that said holes (17a, 17b, 17c, 17d) are aligned in a row roughly perpendicular to the longest axis of said elongated plate-like spring member (16).

6. The structure of the tape cassette according to claims 1 or 4, characterized in that a magnetic tape is wrapped around said pair of reels (14a, 14b).

7. The structure of the tape cassette according to claim 5, characterized in that the number of said projecting pins (20a, 20b; 21a, 21b; 22a, 22b) is at least two, said elongated plate-like spring member (16) has four centrally positioned holes (17a, 17b, 17c, 17d) and said two pins (20a, 20b; 21a, 21b; 22a, 22b) are aligned so as to coincide with the width direction of said elongated plate-like member (16) and engage with two of said holes (17a, 17b, 17c, 17d) in the elongated plate-like spring member (16).

8. The structure of the tape cassette according to claim 7, characterized in that the outermost (17a, 17b) of said four centrally positioned holes (17a, 17b, 17c, 17d) are engaged with said two pins (20a, 20b) respectively.

9. The structure of the tape cassette according to claim 7, characterized in that the two holes (17b, 17d) located at the center and outermost positions of said four centrally positioned holes (17a, 17b, 17c, 17d) are engaged with said two pins (21a, 21b) respectively.

10. The structure of the tape cassette according to claim 7, characterized in that the two holes (17b, 17c) located at the center positions of said four centrally positioned holes (17a, 17b, 17c, 17d) are engaged with said two pins (22a, 22b) respectively.

11. The structure of the tape cassette according to claims 1 or 4, characterized in that said elongated plate-like spring member (16) is made of a stainless steel.

12. The structure of the tape cassette according to claims 1 or 4, characterized in that said elongated plate-like spring member (16) is flexed toward said pair of reels (14a, 14b).

0262008

## FIG. 1

## FIG.2

0262008

# FIG.3

# FIG.4

0262008

## FIG.5

## FIG.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 368 860 (S. GOTO) <br> * column 2, lines 36-53; figure 5 * <br> --- | 1,2 | G 11 B 23/087 |
| X,A | US-A-4 544 062 (Y. MAEHARA) <br> * column 2, lines 31-58; column 3, lines 29-34; figures 8-10 * <br> --- | 1,2,3-10 | |
| A | GB-A-2 137 165 (TDK) <br> * figure 1 * <br> ----- | | |

| | |
|---|---|
| | **TECHNICAL FIELDS SEARCHED (Int. Cl.4)** |
| | G 11 B 23/00 |

The present search report has been drawn up for all claims

| Place of search | Date of completion of the search | Examiner |
|---|---|---|
| BERLIN | 20-11-1987 | ROGNONI M.G.L. |

EPO FORM 1503 03.82 (P0401)